# EUROPÄISCHE PATENTSCHRIFT

(11) **EP 3 387 658 B1**
(45) Veröffentlichungstag und Bekanntmachung des Hinweises auf die Patenterteilung: **12.08.2020**
(21) Anmeldenummer: 16702018.9
(22) Anmeldetag: 15.01.2016
(51) Int. Cl.: H01F 7/02, G01D 5/14, G01D 5/244, G01L 3/10, H02K 1/27

(54) **MAGNETANORDNUNG UND KUNSTSTOFFGEBUNDENER DAUERMAGNET FÜR EINE SOLCHE MAGNETANORDNUNG**
MAGNET ARRANGEMENT AND PLASTIC PERMANENT MAGNET FOR SUCH A MAGNET ARRANGEMENT
AGENCEMENT D'AIMANT ET AIMANT EN PLASTIQUE POUR LEDIT AGENCEMENT D'AIMANT

(43) Veröffentlichungstag der Anmeldung: 17.10.2018
(73) Patentinhaber: Bomatec Management AG, 8181 Höri (CH); HELLA GmbH & Co. KGaA, 59552 Lippstadt (DE)
(72) Erfinder: GOLTZ, Jürgen, 8181 Höri (CH); SPARENBERG, Mathias, 59555 Lippstadt (DE)
(74) Vertreter: Hochreutener, Joel Marc
(86) Internationale Anmeldenummer: PCT/CH2016/000008
(87) Internationale Veröffentlichungsnummer: WO 2017/120687

(56) Entgegenhaltungen:
- EP-A2- 1 123 794
- DE-A1- 19 836 451
- DE-A1-102008 047 466
- DE-A1-102009 039 082
- JP-A- 2008 224 228

## Beschreibung

### Gebiet der Erfindung

Die Erfindung betrifft eine Magnetanordnung umfassend einen ringförmiges kunststoffgebundenen Dauermagneten und eine zu dem Dauermagneten koaxial angeordnete und mit dem Kunststoffteil dauerhaft verbundene Trägerhülse aus Metall, welche mindestens ein stirnseitiges Flanschelement aufweist, wobei der kunststoffgebundene Dauermagnet mit einer seiner Stirnseiten unmittelbar an dem mindestens einem Flanschelement der Trägerhülse anliegt. Weiter betrifft die Erfindung einen kunststoffgebundenen Dauermagneten für eine solche Magnetanordnung.

### Hintergrund

Es ist bekannt, den magnetischen Teil einer Magnetanordnung, wie sie insbesondere für Drehmoment- und Drehwinkelsensoren zum Einsatz kommt, als sogenanntes hochgefülltes Kunststoffteil auszubilden. Ein solcher ringförmiger "Kunststoffmagnet" wird mit einer metallischen Trägerhülse verbunden, welche der Montage der derart gebildeten Magnetanordnung auf einer Welle dient, die zum Beispiel Teil der Lenksäule eines Fahrzeugs ist. EP 1 123 794 erläutert eine Lösung zur Verbindung des magnetischen Kunststoffteils mit der metallischen Trägerhülse bzw. mit einem metallischen Grundkörper, bei welcher das Kunststoffteil an den Grundkörper angespritzt wird. Diese Lösung kann gemäss EP 1 123 794 zum Abreissen des Kunststoffkörpers vom Grundkörper auf Grund wechselnder Wärmebelastung der Magnetanordnung führen. EP 1 123 794 schlägt zur Lösung dieses Problems vor, ein weiteres Bauelement in Form eines Zwischenelements aus elastischem Kunststoffmaterial zwischen dem Grundkörper und dem magnetischen Kunststoffteil vorzusehen, so dass das Kunststoffteil nicht unmittelbar sondern über das Zwischenelement mit dem Grundkörper aus Metall verbunden ist. Eine derartige Lösung wird auch von DE 10 2008 047 466 A1 vorgeschlagen, welches Dokument ebenfalls eine Magnetanordnung mit einem durch ein Kunststoff-Spritzgiessverfahren hergestellten Magnetring und einer metallischen Trägerhülse für den Magnetring betrifft. Die genannten Lösungen haben sich bewährt, sind aber aufwändig in deren Herstellung. DE 10 2009 039 082 A1 zeigt eine Magnetbaugruppe mit einem Magnetring gemäss dem eingangs genannten Oberbegriff. In diesem Dokument wird es zur Verbindung des Magneten mit der Trägerhülse gelehrt, acht Dome am Magneten vorzusehen, welche in acht korrespondierende Löcher in der Trägerhülse eingreifen, welche Dome durch Umformung form- oder kraftschlüssig mit der Trägerhülse verbunden werden müssen. Auch dies ist aufwändig in der Herstellung. DE 198 36 451 A1 lehrt es sechs laschenförmige Teile der Hülse im kunststoffgebundenen Dauermagneten anzuordnen. Dabei besteht allerdings die Gefahr, dass trotz Verbiegung der Laschen Risse im Dauermagneten entstehen.

JP2008-224228 offenbart eine Befestigungsstruktur eines Magnetringes mit einer Trägerhülse.

### Darstellung der Erfindung

Der Erfindung liegt die Aufgabe zu Grunde eine Magnetanordnung der eingangs genannten Art zu schaffen, welche wechselnden Wärmebelastungen widersteht und kostengünstig herstellbar ist.

Diese Aufgabe wird mittels einer Magnetanordnung gemäss Anspruch 1 gelöst, indem der kunststoffgebundene Dauermagnet, welcher nachfolgend auch der Einfachheit halber als Kunststoffteil bezeichnet wird, mit einer seiner Stirnseiten unmittelbar an dem mindestens einen Flanschelement der Trägerhülse anliegt und mittels den genau drei oder vier von der genannten Stirnseite des Kunststoffteils wegragenden Ausformungen des Kunststoffteils formschlüssig mit dem einen Flanschelement oder formschlüssig mit den mehreren Flanschelementen der Trägerhülse verbunden ist, so dass das Kunststoffteil und die Trägerhülse in koaxialer Richtung durch den Formschluss miteinander fest verbunden sind.

Es hat sich gezeigt, dass mit einer solchen formschlüssigen und unmittelbaren Verbindung zwischen dem kunststoffgebunden Dauermagneten und der Trägerhülse eine dauerhafte Verbindung erzielbar ist. Durch die unmittelbare Verbindung entfällt ein Zwischenelement und der Schritt zu dessen Herstellung, was die erfindungsgemässe Magnetanordnung effizienter und damit kostengünstiger herstellbar macht.

Die Formschlussverbindung kann derart ausgeführt sein, dass sich mit der Verbindung der Ausformungen und des Flanschelements bzw. der Flanschelemente eine unlösbare bzw. dauerhafte Formschlussverbindung ergibt. Bevorzugt ist indes vorgesehen, dass die Ausformungen und das Flanschelement bzw. die Flanschelemente bajonettverschlussartig verbunden sind, und dass mindestens ein Blockiermittel vorgesehen ist, welches ein Lösen der bajonettverschlussartigen Verbindung blockiert.

Die Ausformungen sind bevorzugt einstückig an dem Kunststoffteil ausgebildet. Für die bevorzugte Verbindung von Kunststoffteil und Trägerhülse mittels einer bajonettverschlussartigen Verbindung weisen die Ausformungen einen an die genannte Stirnfläche angrenzenden Einschnitt auf. Dabei ist es besonders bevorzugt, dass mindestens einer der Einschnitte, insbesondere alle der Einschnitte, jeweils in Seitenansicht gesehen sich verengend verlaufen. Weiter bevorzugt ist dies so ausgeführt, dass der Flansch im Einschnitt in einem Passsitz gehalten ist, oder dass der Flansch im Einschnitt in einem Presssitz gehalten ist. Auf die bevorzugte Weise ergibt sich eine besonders gute und einfach unmittelbare Verbindung zwischen Kunststoffteil und Trägerhülse.

Weiter ist es bevorzugt, dass das Blockiermittel von mindestens einem Sackloch im Kunststoffteil gebildet ist, in welches ein Stift eingepresst ist, der eine Drehbewegung zwischen Kunststoffteil und Trägerhülse um deren Mittellängsachse blockiert.

Der Erfindung liegt weiter die Aufgabe zu Grunde, einen kunststoffgebundenen Dauermagneten zu schaffen, welcher eine einfache und kostengünstige Montage an eine Trägerhülse ermöglicht.

Dies wird gemäss gemäss der Erfindung mit den Merkmalen des Anspruchs 9 erreicht.

Ein solcher kunststoffgebundener Dauermagnet (im Folgenden vereinfacht als Kunststoffteil bezeichnet) ermöglicht die unmittelbare Verbindung mit einer Trägerhülse mittels der Ausformungen und erzielt damit die bereits bei der Magnetanordnung genannten Vorteile.

Weiter vorteilhafte Ausgestaltungen des Kunststoffteils ergibt sich aus dem abhängigen Anspruch.

Somit ist bei einer Magnetanordnung, mit einem solchen Kunststoffteil, wie sie zum Beispiel für die Drehwinkel- und Drehmomentmessung verwendet wird, ein magnetisches Kunststoffteil mit einer metallenen Trägerhülse derart verbunden, dass das Kunststoffteil direkt an Flanschelementen der Trägerhülse anliegt und dass die drei oder vier Ausformungen des Kunststoffteils eine Formschlussverbindung zwischen Kunststoffteil und Trägerhülse bilden, welche diese in Richtung der gemeinsamen Mittelängsachse von Kunststoffteil und Trägerhülse verbindet. Die Formschlussverbindung kann in sich selber unlösbar und damit dauerhaft sein oder es können zusätzliche Blockiermittel vorgesehen sein, welche ein Lösen der Formschlussverbindung verhindern.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Die Figuren 1 bis 9 ein erstes, nicht erfindungsgemässes Ausführungsbeispiel, worin
Figur 1 eine Seitenansicht des kunststoffgebundenen Dauermagneten bzw. des Kunststoffteils zeigt;
Figur 2 eine Draufsicht auf das Kunststoffteil mit Blick auf die Stirnfläche des Kunststoffteils zeigt, welche zur unmittelbaren Anlage an die Trägerhülse gelangt;
Figur 3 eine schaubildliche Ansicht des ringförmigen Kunststoffteils zeigt;
Figur 4 eine Seitenansicht der Trägerhülse zeigt;
Figur 5 eine Draufsicht auf die Trägerhülse zeigt;
Figur 6 eine schaubildliche Ansicht der Trägerhülse zeigt;
Figur 7 eine Seitenansicht der Magnetanordnung zeigt;
Figur 8 eine Draufsicht auf die Magnetanordnung mit Blick auf die Trägerhülse zeigt;
Figur 9 eine schaubildliche Ansicht der Magnetanordnung aus Kunststoffteil und Trägerhülse zeigt;
die Figuren 10 bis 18 ein erfindungsgemässes Ausführungsbeispiel der Erfindung, worin

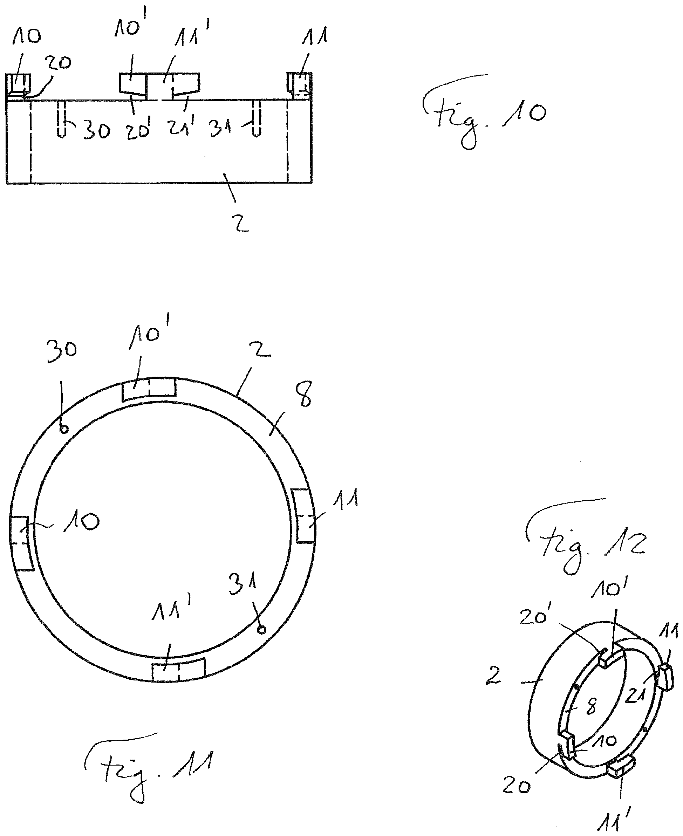

Figur 10 eine Seitenansicht des Kunststoffteils zeigt;
Figur 11 eine Draufsicht auf das Kunststoffteil mit Blick auf die Stirnfläche des Kunststoffteils zeigt, welche zur unmittelbaren Anlage an die Trägerhülse gelangt;
Figur 12 eine schaubildliche Ansicht des ringförmigen Kunststoffteils zeigt;

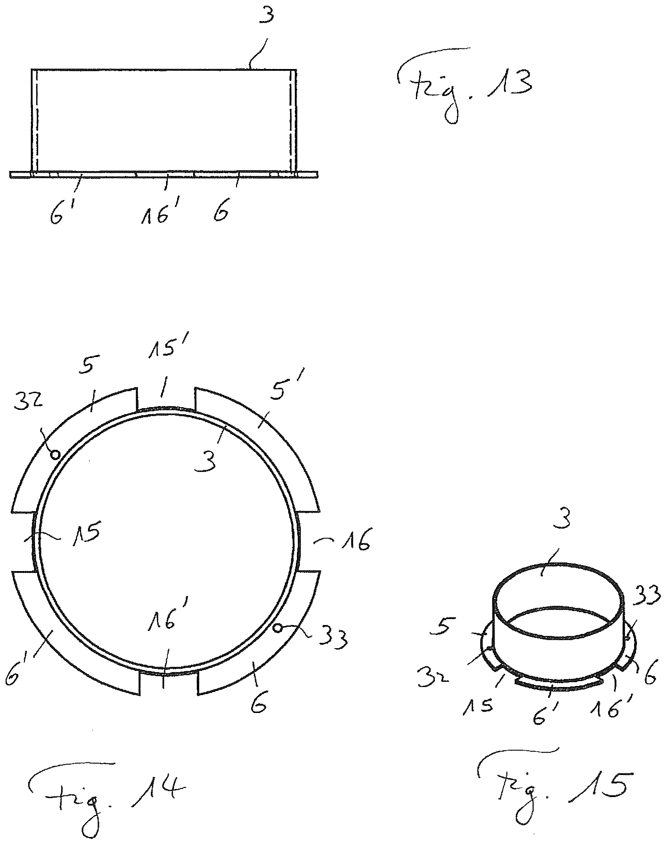

Figur 13 eine Seitenansicht der Trägerhülse zeigt;
Figur 14 eine Draufsicht auf die Trägerhülse zeigt;
Figur 15 eine schaubildliche Ansicht der Trägerhülse zeigt;

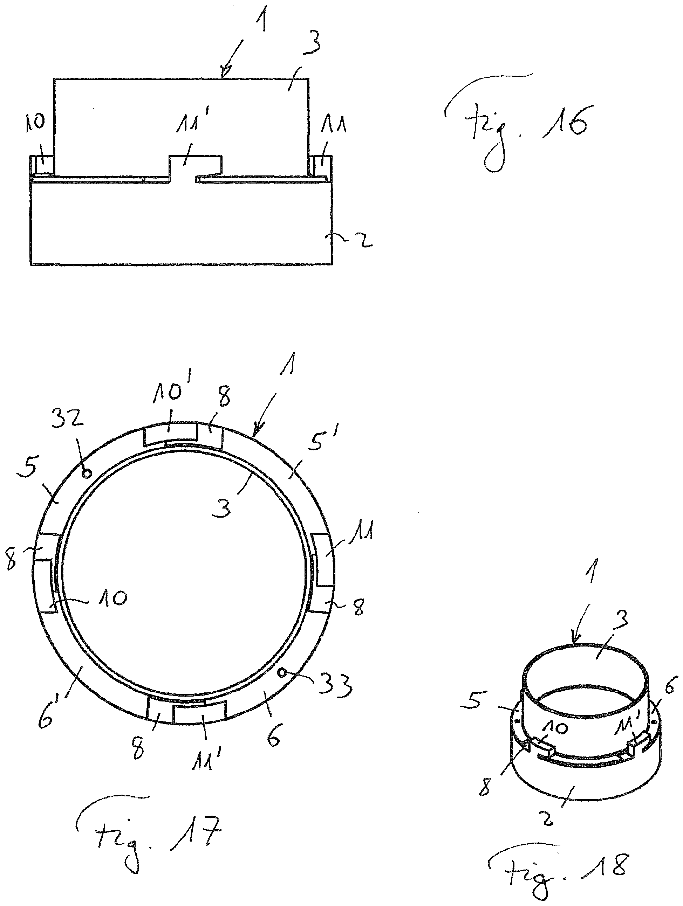

Figur 16 eine Seitenansicht der Magnetanordnung zeigt;
Figur 17 eine Draufsicht auf die Magnetanordnung mit Blick auf die Trägerhülse zeigt;
Figur 18 eine schaubildliche Ansicht der Magnetanordnung aus Kunststoffteil und Trägerhülse zeigt; und

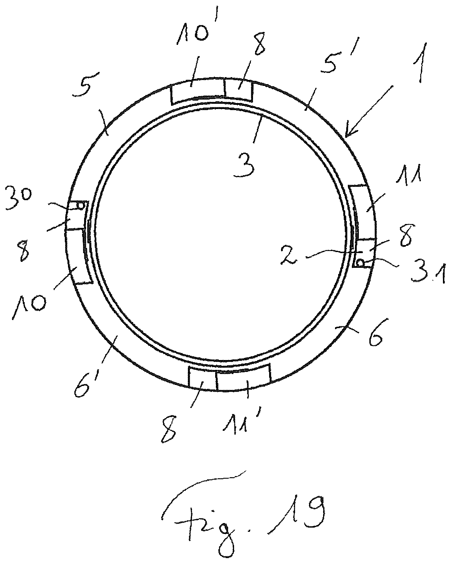

die Figur 19 eine weitere erfindungsgemässe Ausführungsform zeigt, von der eine Draufsicht auf die Magnetanordnung mit Blick auf die Trägerhülse dargestellt ist, um die Unterschiede zur ersten erfindungsgemässen Ausführungsform zu zeigen.

### Weg(e) zur Ausführung der Erfindung

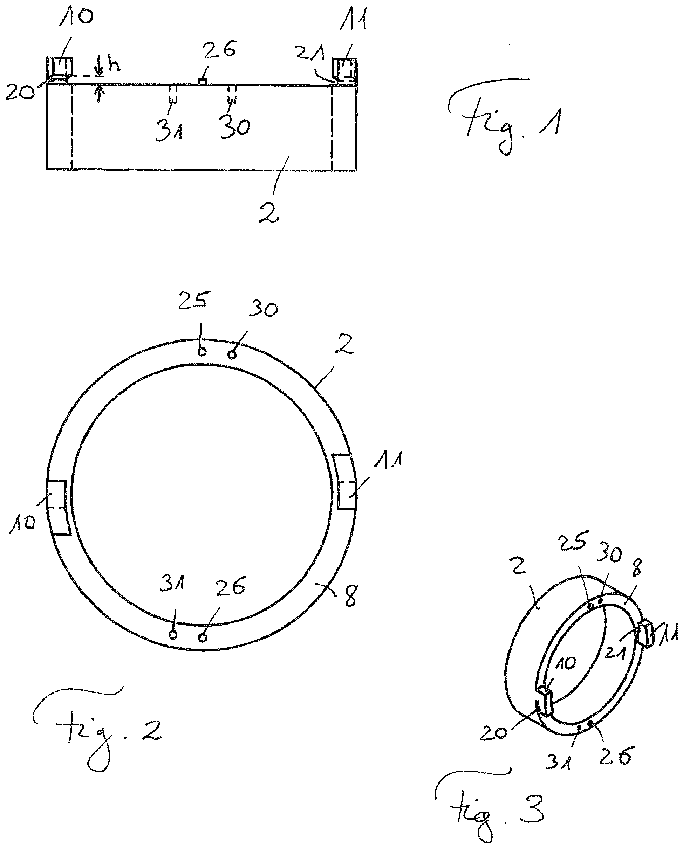

An Hand der Figuren 1 bis 9 wird ein erstes, nicht erfindungsgemässes Ausführungsbeispiel erläutert.

Figur 3 zeigt schaubildlich als Beispiel einen ringförmigen kunststoffgebundenen Dauermagneten 2 der Magnetanordnung. Solche kunststoffgebundenen Dauermagnete, welche nachfolgend auch als Kunststoffteile bezeichnet werden sind dem Fachmann bekannt und auch deren Herstellung durch Spritzgiessen. Der kunststoffgebundene Dauermagnet weist entlang seines Umfangs eine Abfolge von magnetischen Nord- und Südpolen auf, welche in einer Drehwinkel- und Drehmomentmessanordnung von Magnetfeldsensoren detektiert werden können. Auch dies ist dem Fachmann bekannt und wird hier nicht weiter erläutert.

Das ringförmige Kunststoffteil weist an einer seiner Stirnseiten zwei Ausformungen auf. Im Beispiel des Kunststoffteils von Figur 3 sind dies zwei einander diametral gegenüberliegenden Ausformungen 10 und 11, welche von der Stirnseite 8 des Kunststoffteils 2 ausgehen. Die Ausformungen sind einstückig mit dem ringförmigen Hauptkörper des Kunststoffteils ausgebildet. Sie werden somit beim Spritzguss des Kunststoffteils gebildet und weisen ebenfalls magnetische Eigenschaften auf. Die Lage der Ausformungen wird dabei entlang des Umfangs des ringförmigen Kunststoffteils vorzugsweise so gewählt, dass auch in den Ausformungen jeweils ein magnetischer Nordpol und ein magnetischer Südpol vorhanden ist. Die Figuren 2 und 1 zeigen eine Draufsicht auf das Kunststoffteil mit seinen Ausformungen bzw. eine Seitenansicht.

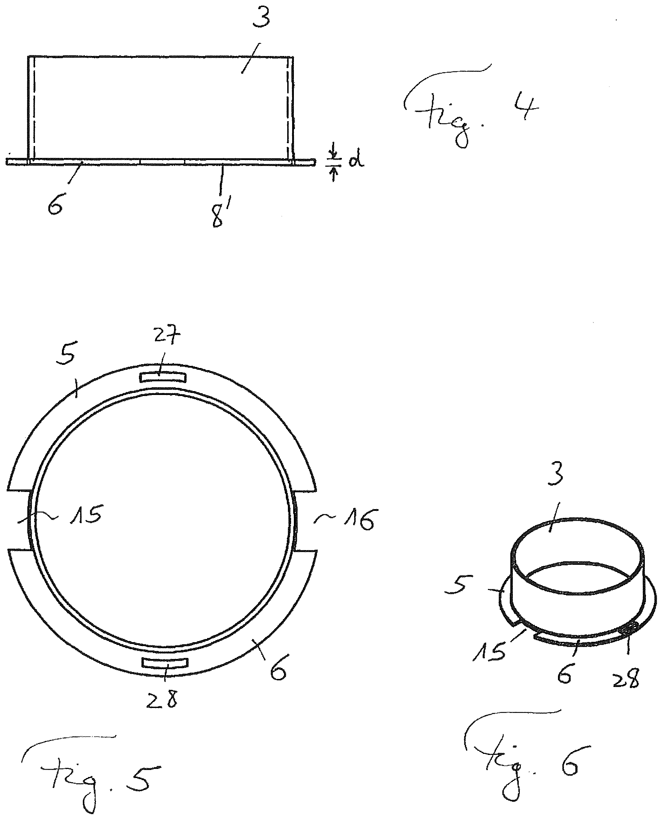

In Figur 6 ist ein Beispiel einer Trägerhülse 3 der Magnetanordnung schaubildlich dargestellt. Diese Trägerhülse 3 weist zwei Flanschelemente 5 und 6 auf, welche sich jeweils einander gegenüberliegend entlang des Umfangs der Trägerhülse erstrecken. Zwischen den beiden Flanschelementen ist eine Lücke 15 bzw. 16 vorgesehen. Die Lücke ist jeweils so gross, dass die Ausformungen 10 bzw. 11 des Kunststoffteils 2 hindurch geführt werden können, damit eine bajonettartige Verbindung des Teils 2 und der Hülse 3 ermöglicht wird, wie nachfolgend erläutert. Die Figuren 5 und 4 zeigen eine Draufsicht auf die Trägerhülse bzw. eine Seitenansicht. In der Seitenansicht von Figur 4 ist die Stirnseite 8' der Flanschelemente bezeichnet, an welche die Stirnseite 8 des Kunststoffteils bei der Magnetanordnung unmittelbar zur Anlage kommt. In den Figuren 5 und 6 ist jeweils die Rückseite dieser Stirnseite 8' ersichtlich. Anstelle einer Trägerhülse mit mehreren Flanschelementen, die durch Lücken getrennt sind, könnte auch ein einziger, durchgehender Flansch vorgesehen sein, welcher anstelle der Lücken Ausnehmungen aufweist, durch welche die Ausformungen des Kunststoffteils hindurchgesteckt werden können.

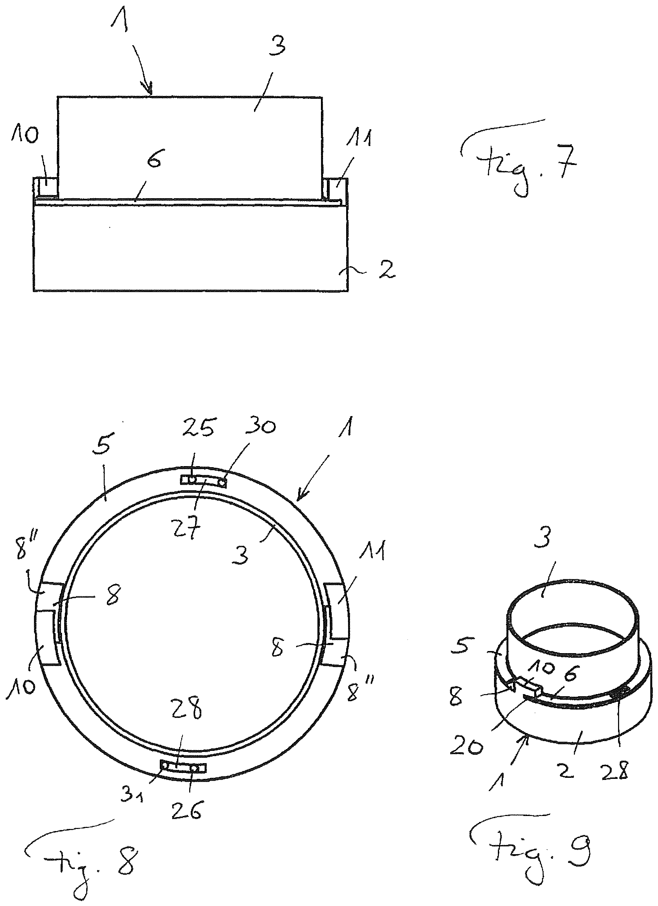

Figur 9 zeigt die Magnetanordnung 1, bei welcher das magnetische Kunststoffteil 2 und die Trägerhülse 3 miteinander dauerhaft verbunden sind. Das Kunststoffteil und die Trägerhülse sind koaxial angeordnet und deren Mittelängsachsen liegen somit auf derselben Geraden. Die Ausformungen des Kunststoffteils greifen formschlüssig an den Flanschelementen an, so dass sich erfindungsgemäss in der Richtung der Mittellängsachsen eine feste Verbindung ergibt. Ist die Formschlussverbindung als nicht mehr lösbare Verbindung ausgeführt, so ist damit die Verbindung bereits hergestellt.

Bei dem dargestellten Ausführungsbeispiel erfolgt die Verbindung in der Art eines Bajonettverschlusses, was auch bei den nachfolgenden Ausführungsbeispielen der Fall ist. Dies ist eine bevorzugte Verbindungsart. In den Figuren 1 bis 3, die das Kunststoffteil 2 zeigen ist ersichtlich, dass die Ausformungen 10 bzw. 11 jeweils einen Einschnitt 20 bzw. 21 aufweisen, der sich zwischen der Stirnfläche 8 und der Ausformung 10 bzw. 11 erstreckt. Die Höhe h des Einschnitts (Figur 1) entspricht dabei im Wesentlichen der Dicke d der Flanschelemente (Figur 4), oder verläuft bevorzugt so, dass die Höhe h von der Seite gesehen gegen das Ende des Einschnitts abnimmt, was noch erläutert wird. Somit erlaubt der Einschnitt 20 bzw. 21 die bajonettartige Verbindung des Kunststoffteils und der Flanschelemente, wie in der Figur 9 sowie in der Draufsicht auf die Magnetanordnung 1 gemäss Figur 8 und der Seitenansicht der Magnetanordnung 1 gemäss Figur 7 dargestellt. Dies erfolgt so, dass nach dem Einführen der Ausformungen 10 und 11 in die entsprechende Lücke 15 bzw. 16, bei welcher die Stirnfläche 8 des Kunststoffteils an die Stirnflächen 8' der Flanschelemente zum Anliegen kommt, eine drehende Relativbewegung zwischen Kunststoffteil 2 und Trägerhülse 3 erfolgt ist, bei welcher das Flanschelement 6 mit seinem der Lücke 15 benachbarten Abschnitt in den Einschnitt 20 eingeführt worden ist bzw. mit der Ausformung 10 in Formschluss gebracht worden ist. Entsprechend ist das Flanschelement 5 durch die Drehung mit seinem der Lücke 16 benachbarten Abschnitt in den Einschnitt 21 eingeführt worden und somit auch der Formschluss in Richtung der Mittellängsachse zwischen der Ausformung 11 und dem Flanschelement 5 erzielt worden ist. Die Dimensionierung der Ausformungen und der Flanschelemente ist so gewählt, dass sich durch den Formschluss ein genügend festes Anliegen der Stirnfläche 8 an den Stirnflächen 8' ergibt. Die Einschnitte 20 und 21 sind bevorzugt, in Seitenansicht gesehen, mit abnehmender Höhe ausgeführt, mit der grösseren Höhe am Eingang des Einschnitts, so dass sich bei der Drehbewegung ein zunehmendes Anliegen bzw. Anpressen des Kunststoffelements 2 an der Trägerhülse 3 ergibt. Die Höhe h am Ende des Einschnitts kann dabei genau der Dicke des Flansches entsprechend gewählt sein, so dass sich dort ein fester Sitz (Passsitz) des Flansches im Einschnitt ergibt oder die Höhe h des Einschnitts am Ende des Einschnitts kann sogar geringfügig geringer als die Dicke des Flansches gewählt sein, so dass die Ausformung geringfügig elastisch verformt wird, wenn die Drehbewegung abgeschlossen wird, so dass sich dort ein Presssitz des Flansches ergibt.

Bei dem gezeigten Ausführungsbeispiel wird das Zusammenstecken von Kunststoffteil 2 und Trägerhülse 3 in der richtigen Stellung dadurch erleichtert, dass an dem Kunststoffteil 2 entlang der Stirnfläche 8 zwischen den Ausformungen 10 und 11 jeweils eine weitere Ausformung, hier als einfacher zylindrischer Zapfen vorgesehen ist, welcher jeweils beim Zusammenstecken zur Zentrierung der beiden Bauteile 2 und 3 hilft, indem die Zapfen 25 und 26 in entsprechende Langlöcher 27 bzw. 28 eingreifen. Durch die Langlöcher sind so dimensioniert, dass die Zapfen die Drehbewegung nicht hindern.

Da die bei diesem Ausführungsbeispiel gewählte bajonettverschlussartige Verbindung den Formschluss bewirkt, muss diese Verbindung gegen ein Zurückdrehen blockiert sein, da hier eine dauerhafte Verbindung erzielt werden soll und nicht ein lösbarer Bajonettverschluss. Eine solche Blockierung gegen eine lösende Drehbewegung kann sich bereits durch einen genügend starken Reibschluss zwischen dem Kunststoffteil und der Trägerhülse auf Grund der geschilderten Verbindung ergeben. Bevorzugt ist aber mindestens ein Blockiermittel vorgesehen, welches die Rückdrehung blockiert.

Entsprechende Blockiermittel, die die erfolgte Verbindung gegen ein Lösen sichern, könnte eine Rastverbindung bei mindestens einer der Ausformungen 10, 11 und dem zugehörigen Flanschelement 6 bzw. 5 sein. Die Ausführung einer solchen Rastung zwischen Ausformung und dem Flanschelement kann auf beliebige dem Fachmann bekannte Weise erfolgen. Es könnte stattdessen oder zusätzlich auch ein chemisches Blockiermittel in Form eines partiellen Klebstoffauftrags vorgesehen sein, insbesondere an einer Stelle 8" oder an beiden Stellen 8" (Figur 8) an denen die Stirnfläche 8 frei liegt, so dass eine durch Klebstoff gebildete Erhöhung an dieser Stelle die Ausformung 10 oder 11 oder beide Ausformungen gegen ein Zurückdrehen blockiert. In dem gezeigten Beispiel wird das Blockiermittel durch einen Stift oder durch zwei Stifte ausgeführt, welche in das Kunststoffteil eingepresst werden und ein Zurückdrehen von Kunststoffteil 2 und Trägerhülse 3 verhindern. Damit - und auch durch die anderen genannten Blockiermittel - wird die bajonettverschlussartige Verbindung zu einer dauerhaften bzw. unlösbaren Verbindung, was bei der vorliegenden Erfindung wesentlich ist. In dem gezeigten Beispiel ist sind im Kunststoffteil 2 Sacklöcher 30 und 31 vorgesehen, welche bei der Magnetanordnung 1, wie in Figur 8 ersichtlich, durch das jeweilige Langloch 27 und 28 an jeweils einem Ende zugänglich sind. Wird jeweils ein - nicht dargestellte Stift - in dieses Sackloch eingepresst, so dass er noch aus dem Sackloch vorsteht, so ergibt sich dadurch eine Blockierung des Zurückdrehens von Kunststoffteil 2 und Trägerhülse 3. Die Stifte bestehen vorzugsweise aus einem nichtmagnetischen Metallmaterial. In Figur 9 ist diese Blockierung nur durch eine schwarze Fläche angedeutet und nicht im Detail gezeigt.

An Hand der Figuren 10 bis 18 wird ein erstes erfindungsgemässes Ausführungsbeispiel erläutert. Dabei bezeichnen gleiche Bezugszeichen wie beim vorherigen nicht erfindungsgemässen Beispiel gleiche oder funktionsgleiche Bauteile. Figur 12 zeigt das Kunststoffteil 2 in schaubildlicher Darstellung. Bei dieser Ausführung sind an dem Kunststoffteil 2 vier Ausformungen vorgesehen, so dass zu den Ausformungen 10 und 11 noch die Ausformungen 10' und 11' hinzukommen. Die Ausformungen stehen ebenfalls von der Stirnfläche 8 ab. Sie sind in diesem Beispiel gleichmässig entlang der Stirnfläche verteilt. Auch diese Ausformungen weisen wieder Einschnitte 20 und 21 sowie zusätzlich 20' und 21' auf, die eine bajonettverschlussartige Verbindung erlauben, wie beim vorherigen Beispiel. Zentrierzapfen, wie beim vorherigen Beispiel, sind bei dieser Ausführung aber nicht vorgesehen, da das Zentrieren und Zusammenstecken des Kunststoffteils 2 und der Trägerhülse dank der zusätzlichen Ausformungen einfach ist. Sacklöcher 30 und 31 für ein Blockiermittel sind vorgesehen, allerdings an anderer Stelle entlang der Stirnfläche 8. Gut ersichtlich ist in der Seitenansicht von Figur 10 bei den dort in Seitenansicht ersichtlichen Einschnitte 20' und 21', dass diese, wie bevorzugt, sich verengend verlaufen, mit der grösseren Höhe am Eingang des Einschnitts. Es gelten dazu die beim zuvor gezeigten Beispiel gemachten Bemerkungen, insbesondere, dass der jeweilige Flansch dort in einem Passsitz oder einem Presssitz gehalten sein kann.

Die Trägerhülse 3 weist bei diesem Beispiel vier Flanschelemente 5, 5' und 6, 6' auf, welche durch die Lücken 15, 16 und 15' und 16' voneinander getrennt sind, wie insbesondere in Figur 14 ersichtlich. In diesem Beispiel weist die Trägerhülse in den beiden Flanschelementen 5 und 6 je eine Bohrung 32 und 33 auf, welche je das Hindurchführen eines Stifts als Blockiermittel erlaubt. Figur 18 zeigt die Magnetanordnung 1, die durch Verbindung des Kunststoffteils 2 und der Trägerhülse 3 gebildet worden ist. Dies ebenfalls durch die relative Drehung der beiden Bauteile 2 und 3 zueinander, nachdem die Ausformungen 10, 11 und 10', 11' in die zugehörigen Lücken gesteckt worden sind, um die Einschnitte der Ausformungen und die zugehörigen Abschnitte der Flanschelemente in Formschluss zu bringen, um die feste Verbindung in Richtung der Mittellängsachse zu bewirken. Als Blockiermittel könnten auch hier mindesten ein Tropfen eines Klebstoffs vorgesehen werden. Bevorzugt ist indes die dargestellte Lösung für das Blockiermittel, bei welcher die Sacklöcher 30 und 31 im Kunststoffteil 2 nach der Drehung der Bauteile 2 und 3 zur Erstellung der Formschlussverbindung mit den Bohrungen 32 und 33 fluchten, so dass auch mindestens ein Sackloch oder in beide Sacklöcher durch die jeweilige Bohrung ein Stift eingepresst wird, der ein Zurückdrehen verhindert.

Figur 19 zeigt ein weiteres Ausführungsbeispiel der Erfindung, für welches nur die Draufsicht auf die Magnetanordnung 1 dargestellt ist. Dieses Beispiel entspricht für die Formschlussverbindung dem Beispiel der Figuren 10 bis 18. Es ist aber als Blockiermittel mindestens ein Sackloch vorgesehen, welches nach dem Verdrehen in einer Lücke zwischen zwei Flanschelementen zugänglich ist. In diesem Beispiel sind zwei Sacklöcher dargestellt. In mindestens eines derselben kann ein Stift eingepresst werden, um das Blockiermittel zu bilden.

Wie bereits erwähnt, bestehen die Stifte der Blockiermittel vorzugsweise aus einem nichtmagnetischen Material. Ebenso wurde erwähnt, dass sich bevorzugt die Ausformungen des magnetischen Kunststoffteils über einer Grenze befinden, an welcher ein Nordpol entlang des Umfangs der Stirnfläche an einen Südpol angrenzt. Dabei ist es bevorzugt, wenn die Ausformung entsprechend teilweise einen Nordpol und teilweise einen Südpol umfasst bzw. dass die Grenze zwischen den beiden Polen auch durch die Ausformung verläuft.

Bei einer Magnetanordnung gemäss der Erfindung, wie sie zum Beispiel für die Drehwinkel- und Drehmomentmessung verwendet wird, ist somit ein kunststoffgebundener Dauermagnet mit einer metallenen Trägerhülse derart verbunden, dass das Kunststoffteil direkt an Flanschelementen der Trägerhülse anliegt und dass Ausformungen des Kunststoffteils eine Formschlussverbindung zwischen Kunststoffteil und Trägerhülse bilden, welche diese in Richtung der gemeinsamen Mittelängsachse von Kunststoffteil und Trägerhülse verbindet. Die Formschlussverbindung kann in sich selber unlösbar und damit dauerhaft sein oder es können zusätzliche Blockiermittel vorgesehen sein, welche ein Lösen der Formschlussverbindung verhindern.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Magnetanordnung (1) umfassend einen ringförmigen hülsenförmigen kunststoffgebundenen Dauermagneten (2) und eine zu dem Dauermagneten koaxial angeordnete und mit dem Dauermagneten dauerhaft verbundene Trägerhülse (3) aus Metall, welche mindestens ein stirnseitiges Flanschelement (5, 5', 6, 6') aufweist, wobei der kunststoffgebundene Dauermagnet (2) mit einer seiner Stirnseiten (8) unmittelbar an dem mindestens einen Flanschelement (5, 5', 6, 6') der Trägerhülse anliegt, **dadurch gekennzeichnet, dass** der kunststoffgebundene Dauermagnet genau drei oder vier jeweils gleichmässig voneinander beabstandete Ausformungen (10, 11, 10', 11') aufweist und mittels dieser von der genannten Stirnseite (8) des kunststoffgebundenen Dauermagneten wegragenden Ausformungen (10, 10', 11, 11') des kunststoffgebundenen Dauermagneten formschlüssig mit dem einen Flanschelement oder formschlüssig mit den mehreren Flanschelementen (5, 5', 6, 6') der Trägerhülse verbunden ist, so dass der kunststoffgebundene Dauermagnet und die Trägerhülse in koaxialer Richtung durch den Formschluss miteinander fest verbunden sind.

2. Magnetanordnung nach Anspruch 1, **dadurch gekennzeichnet, dass** die Ausformungen (10, 10', 11, 11') und das Flanschelement bzw. die Flanschelemente (5, 5', 6, 6') bajonettverschlussartig verbunden sind, und dass mindestens ein Blockiermittel vorgesehen ist, welches ein Lösen der bajonettverschlussartigen Verbindung blockiert.

3. Magnetanordnung nach einem der Ansprüche 1 oder 2, **dadurch gekennzeichnet, dass** die Ausformungen einstückig an dem kunststoffgebundenen Dauermagnet ausgebildet sind.

4. Magnetanordnung nach Anspruch 1, **dadurch gekennzeichnet, dass** der Formschluss mit der Verbindung der Ausformungen (10, 11, 10', 11') mit dem Flanschelement bzw. den Flanschelementen eine unlösbare bzw. dauerhafte Formschlussverbindung von Dauermagnet (2) und Trägerhülse (3) ergibt.

5. Magnetanordnung nach einem der Ansprüche 1 bis 4, **dadurch gekennzeichnet, dass** die Ausformungen (10, 10', 11, 11') einen an die genannte Stirnfläche (8) angrenzenden Einschnitt (20, 20', 21, 21') aufweisen.

6. Magnetanordnung nach Anspruch 5, **dadurch gekennzeichnet, dass** mindestens einer der Einschnitte, insbesondere alle der Einschnitte, jeweils in Seitenansicht gesehen sich verengend verlaufen.

7. Magnetanordnung nach Anspruch 6, **dadurch gekennzeichnet, dass** der Flansch im Einschnitt in einem Passsitz gehalten ist, oder dass der Flansch im Einschnitt in einem Presssitz gehalten ist.

8. Magnetanordnung nach Anspruch 2 oder einem der Anaprüche 3-7, sofern abhängig von Anspruch 2, **dadurch gekennzeichnet, dass** das Blockiermittel von mindestens einem Sackloch (30, 31) im Kunststoffteil gebildet ist, in welches ein Stift eingepresst ist, der eine Drehbewegung zwischen Kunststoffteil und Trägerhülse um deren Mittellängsachse blockiert.

9. Kunststoffgebundener Dauermagnet (2) für eine Magnetanordnung nach einem der Ansprüche 1 bis 8, wobei der Dauermagnet hülsenförmig ausgestaltet ist, **dadurch gekennzeichnet dass** der Dauermagnet genau drei oder vier von einer seiner Stirnseiten weg ragende genannte Ausformungen (10, 11, 10', 11') zur formschlüssigen Verbindung des Dauermagneten mit dem mindestens einen Flanschelement der Trägerhülse der Magnetanordnung aufweist, welche gleichmässig entlang des Umfangs der Stirnseite verteilt sind und welche einstückig an dem Kunststoffteil ausgebildet sind.

10. Kunststoffgebundener Dauermagnet nach Anspruch 9, **dadurch gekennzeichnet, dass** mindestens eine der Ausformungen, insbesondere alle der Ausformungen, mit einem Einschnitt versehen ist, welcher an die Stirnseite des Dauermagneten angrenzt und in Seitenansicht auf die Ausformung zum Ende des Einschnitts hin zusammenlaufend ausgebildet ist.

## Claims

1. A magnet assembly (1) comprising a ringshaped sleeve-shaped plastic-bonded permanent magnet (2) and a metal support sleeve (3) which is arranged coaxially with respect to the permanent magnet, is permanently connected to the permanent magnet and has at least one end flange element (5, 5', 6, 6'), wherein the plastic-bonded permanent magnet (2) rests by one of its end faces (8) directly against the at least one flange element (5, 5', 6, 6') of the support sleeve, **characterized in that** the plastic-bonded permanent magnet has exactly three or four formations (10, 11, 10', 11'), each of which is evenly spaced apart from the other, and by means of these formations (10, 10', 11, 11') of the plastic-bonded permanent magnet projecting away from the end face (8) of the plastic-bonded permanent magnet connected in a form-fit manner to the one flange element or connected in a form-fit manner to the multiple flange elements (5, 5', 6, 6') of the support sleeve so that the plastic-bonded permanent magnet and the support sleeve are fixedly connected to one another in the coaxial direction via the form-fit connection.

2. Magnet assembly according to claim 1, **characterised in that** the formations (10, 10', 11, 11') and the flange element or the flange elements (5, 5', 6, 6') are connected in the manner of a bayonet lock, and that at least one blocking means is provided which blocks release of the bayonet lock-like connection.

3. Magnet assembly according to one of claims 1 or 2, **characterised in that** the formations are formed in one piece on the plastic-bonded permanent magnet.

4. Magnet assembly according to claim 1, **characterised in that** the form-fit connection with the connection of the formations (10, 11, 10', 11') with the flange element(s) results in an unreleasable or permanent form-fit connection of the permanent magnet (2) and the support sleeve (3).

5. Magnet assembly according to one of claims 1 to 4, **characterised in that** the formations (10, 10', 11, 11') have an indentation (20, 20', 21, 21') adjoining the end face (8).

6. Magnet assembly according to claim 5, **characterised in that** at least one of the indentations, in particular all of the indentations, extend in a tapering manner when observed in the side view.

7. Magnet assembly according to claim 6, **characterized in that** the flange in the indentation is held with a snug fit, or **in that** the flange in the indentation is held with a press fit.

8. Magnet assembly according to claim 2 or one of claim 3-7 if dependent on claim 2, **characterised in that** the blocking means is formed by at least one blind hole (30, 31) in the plastic part, into which a pin is pressed, which blocks a rotational movement between the plastic part and the support sleeve about their central longitudinal axis.

9. Plastic-bonded permanent magnet (2) for a magnet assembly according to one of claims 1 to 8, wherein the permanent magnet is designed in the form of a sleeve, **characterized in that** the permanent magnet has exactly three or four formations (10, 11, 10', 11') which project away from one of its end faces for a form-fit connection of the permanent magnet with the at least one flange element of the support sleeve of the permanent magnet, wherein the formations (10, 11, 10', 11') are distributed uniformly along the circumference of the end face and are formed in one piece on the plastic part.

10. Plastic-bonded permanent magnet according to claim 9, **characterised in that** at least one of the formations, in particular all of the formations, is provided with an indentation which adjoins the end face of the permanent magnet and, in side view of the formations, is designed to converge towards the end of the indentation.

## Revendications

1. Agencement (1) d'aimant, comprenant un aimant (2) permanent, annulaire, en forme de douille, lié par de la matière plastique et une douille (3) de support en métal, qui est disposée coaxialement à l'aimant permanent, qui est reliée de manière permanente à l'aimant permanent et qui a au moins un élément (5, 5', 6, 6') de rebord, l'aimant (2) permanent lié par de la matière plastique étant en contact directement par l'un de ses côtés (8) frontaux avec le au moins un élément (5, 5', 6, 6') de rebord de la douille de support, **caractérisé en ce que** l'aimant permanent lié par de la matière plastique a exactement trois ou quatre ergots (10, 11, 10', 11') à distance uniformément les uns des autres et, au moyen de ces ergots (10, 10', 11, 11') de l'aimant permanant lié par de la matière plastique et s'éloignant dudit côté (8) frontal de l'aimant permanent lié par de la matière plastique, est relié, à complémentarité de forme à l'élément de rebord ou, à complémentarité de forme, aux plusieurs éléments (5, 5', 6, 6') de rebord de la douille de support, de manière à ce que l'aimant permanent lié par de la matière plastique et la douille de support soient reliés fixement l'un à l'autre par complémentarité de forme dans la direction coaxiale.

2. Agencement d'aimant suivant la revendication 1, **caractérisé en ce que** les ergots (10, 10', 11, 11') et l'élément de rebord ou les éléments (5, 5', 6, 6') de rebord sont reliés à la manière d'une fermeture à baïonnette et **en ce qu'**il est prévu au moins un moyen de blocage, qui empêche la liaison du type à fermeture à baïonnette de se défaire.

3. Agencement d'aimant suivant l'une des revendications 1 ou 2, **caractérisé en ce que** les ergots sont constitués d'une seule pièce avec l'aimant permanent lié par de la matière plastique.

4. Agencement d'aimant suivant la revendication 1, **caractérisé en ce que** la complémentarité de forme par la liaison des ergots (10, 11, 10', 11') à l'élément de rebord ou aux éléments de rebord donne une liaison à complémentarité de forme durable, indissoluble ou permanente de l'aimant (2) permanent et de la douille (3) de support.

5. Agencement d'aimant suivant l'une des revendications 1 à 4, **caractérisé en ce que** les ergots (10, 10', 11, 11') ont une entaille (20, 20', 21, 21') au voisinage de ladite surface (8) frontale.

6. Agencement d'aimant suivant la revendication 5, **caractérisé en ce qu'**au moins l'une des entailles, notamment toutes les entailles, s'étendent chacune, considéré en vue de côté, en se rétrécissant.

7. Agencement d'aimant suivant la revendication 6, **caractérisé en ce que** le rebord est maintenu dans l'entaille à ajustement serré.

8. Agencement d'aimant suivant la revendication 2 ou l'une des revendications 3 à 7, dans la mesure où elles dépendent de la revendication 2, **caractérisé en ce que** le moyen de blocage est formé d'au moins un trou (30, 31) borgne dans la partie en matière plastique, dans lequel est enfoncée une cheville, qui empêche un mouvement de rotation entre la partie en matière plastique et la douille de support autour de son axe longitudinal médian.

9. Aimant (2) permanent lié par de la matière plastique pour un agencement d'aimant suivant l'une des revendications 1 à 8, dans lequel l'aimant permanent est conformé en forme de douille, **caractérisé en ce que** l'aimant permanent a trois ou quatre ergots (10, 11, 10', 11') s'éloignant de l'un de ses côtés frontaux pour la liaison à complémentarité de forme de l'aimant permanent à au moins un élément de rebord de la douille de support de l'agencement d'aimant, qui sont répartis uniformément suivant le pourtour du côté frontal et qui sont constitués d'une seule pièce avec la partie en matière plastique.

10. Aimant permanent lié par de la matière plastique suivant la revendication 9, **caractérisé en ce qu'**au moins l'un des ergots, notamment tous les ergots, est pourvu d'une entaille, qui est voisine du côté frontal de l'aimant permanent et est constituée, en vue de côté de l'ergot, convergente vers l'extrémité de l'entaille.
